# EUROPEAN PATENT APPLICATION

(11) **EP 0 638 834 A2**
(43) Date of publication of application: **15.02.1995**
(21) Application number: 94401854.8
(22) Date of filing: 12.08.1994
(51) Int. Cl.: G02F 1/139, G02F 1/1335

(54) **Display device having a pi-cell configuration and retardation compensation**

(30) Priority: 13.08.1993 NL 9301408
(71) Applicant: SAGEM S.A., F-75016 Paris (FR)
(72) Inventor: Welzen, Theo, 6223 AD Maastricht (NL)
(74) Representative: Fort, Jacques

(57) **Abstract**

In a liquid-crystal display device having a pi-cell configuration between crossed polarizers and having a liquid-crystal retardation value such that it is possible to switch from a Bright state at low voltage to a Dark state at high voltage, the voltage for setting the Dark state can be lowered by making use of retardation films whose optical axes are parallel to the cell surfaces and perpendicular to the projection direction of the liquid-crystal director on the cell surfaces. Positioning of said films on both sides of the pi-cell in such a way that the total film retardation on the one side is equal to that on the other side results in angle-of-view-dependent transmission characteristics having better symmetry than in the case of the films being positioned on one side.

## Description

### BACKGROUND OF THE INVENTION

The invention relates to display devices and particularly to those of the type defined in claim 1 in which use is made of electro-optical effects which occur in so-called Pi-cell liquid crystal configurations.

The Pi-cell configuration has recently been introduced as an electro-optical liquid-crystal effect for applications in which large angles of view are required at all grey levels (intermediate transmission levels between the "Dark" state and the "Bright" state). It is described in :
1. A conference paper by P. Bos and J. Rahman at the SID International Symposium, Seattle, Washington. May 18-20, 1993. (SID Digest of Technical Papers, Volume XXIV, p. 273-276)
2. A conference paper by Y. Yamaguchi, T. Miyashita and T. Uchida at the same SID International Symposium. (SID Digest of Technical Papers, Volume XXIV, p. 277-280)

the contents of which are included in the present application by way of reference.

The abovementioned paper by P. Bos and J. Rahman explains, inter alia, why the Pi-cell liquid-crystal configuration is suitable for applications such as the abovementioned. This is related to the special liquid-crystal configuration (Pi-cell) in which use is made of "reversed" pretilt orientation at the cell surfaces. The resulting Pi-cell liquid-crystal configuration shows optical "self-compensating" behaviour, in which less variation occurs in the effective birefringence as a function of the angle of view, compared to conventional electro-optical birefringent liquid-crystal effects with liquid-crystal director configurations having parallel pretilt orientation at the cell surfaces.

The said lower variation in the effective birefringence results in a larger, more symmetrical angle of view. If the Pi-cell is used in combination with an optical compensator which has a negative value for the birefringence (or retardation) and which is positioned in such a way with respect to the Pi-cell that the optical axis of the compensator is positioned perpendicularly with respect to the Pi-cell surfaces, the angle-of-view dependence of the electro-optical effect is found to be improved yet further, and even to a considerable extent. If the pi-cell, in combination or not in combination with the negative retardation compensator, is placed between two crossed polarizers which (both) form an angle of 45° with the projection of the liquid-crystal director on the cell surfaces, it is possible, given a suitable choice of the retardation of the liquid-crystal cell (i.e. the value of the product of liquid-crystal layer thickness d - or cell thickness d - and the birefringence value dn of the liquid-crystal material), to switch the electro-optical liquid-crystal effect from a Bright state, with a high transmission at low voltage, to a Dark state with a low transmission at high voltage. The transmission of the Dark state decreases, the higher the applied voltage across the liquid-crystal configuration. In principle it is thus possible to achieve very high contrasts (contrast defined as the ratio of the Bright-state transmission and the Dark-state transmission).

The necessary voltages for the Dark state are relatively high, however, P. Bos and J. Rahamn mention voltage values of several tens of volts in the paper mentioned earlier.

These high voltages impede the use of the Pi-cell configuration in liquid-crystal display devices which are constructed as a matrix of pixels, in which active electronic switches (such as, for example, thin-film transistors) for each pixel are used, given the maximally available voltages in such so-called active-matrix-driven display devices. The active-matrix-driven display devices often make use of the twisted-nematic liquid-crystal electro-optical effect. For bilevel applications (i.e. switching solely between Bright and Dark), the twisted-nematic effect has a relatively large angle of view, but for grey levels such as, for example, in video applications, this effect has a fairly limited angle of view.

### SUMMARY OF THE INVENTION

An object of the invention is to achieve a reduction in the voltage which needs to be applied an optically self-compensating liquid crystal director configuration, typically a Pi-cell configuration, in order to attain the Dark state with a transmission almost equal to zero, specifically in such a way that the Pi-cell liquid-crystal effect can also be used in active-matrix-driven display devices.

The invention is based on the finding that, for a particular voltage over the Pi-cell configuration, the resulting transmission can be minimized (or set to zero, as the case may be) by means of retardation compensation, one (or more) retardation films having positive retardation and with the optical axis (axes) parallel to the cell surfaces and perpendicular to the direction of the liquid-crystal director projection being placed on the cell surfaces. The (total) retardation of the retardation films should be equal to the so-called residual retardation of the liquid-crystal layer which is responsible for the low residual transmission. Obviously, the compensation film(s) should be placed between polarizer and pi-cell. Because of symmetrical considerations, positioning retardation films having identical retardation values to each side of the pi-cell is to be recommended.

Instead of retardation films it is also possible to employ liquid-crystal cells as the compensating medium. Retardation films, however, are preferable from a practical point of view. It is of considerable importance that the retardation values of the compensation films can be chosen to be relatively low (for example less than 100 nm) in order to, on the one hand, achieve a Dark state at voltages which, for example, are lower than 10 volts and, on the other hand, to affect the optical qualities of the Bright state only to a very small extent.

Important features of the invention are defined in Claim 1. Other features of the device of the invention, which may be used in connection with the features of Claim 1, are recited in the sub-claims.

### BRIEF DESCRIPTION OF THE DRAWINGS

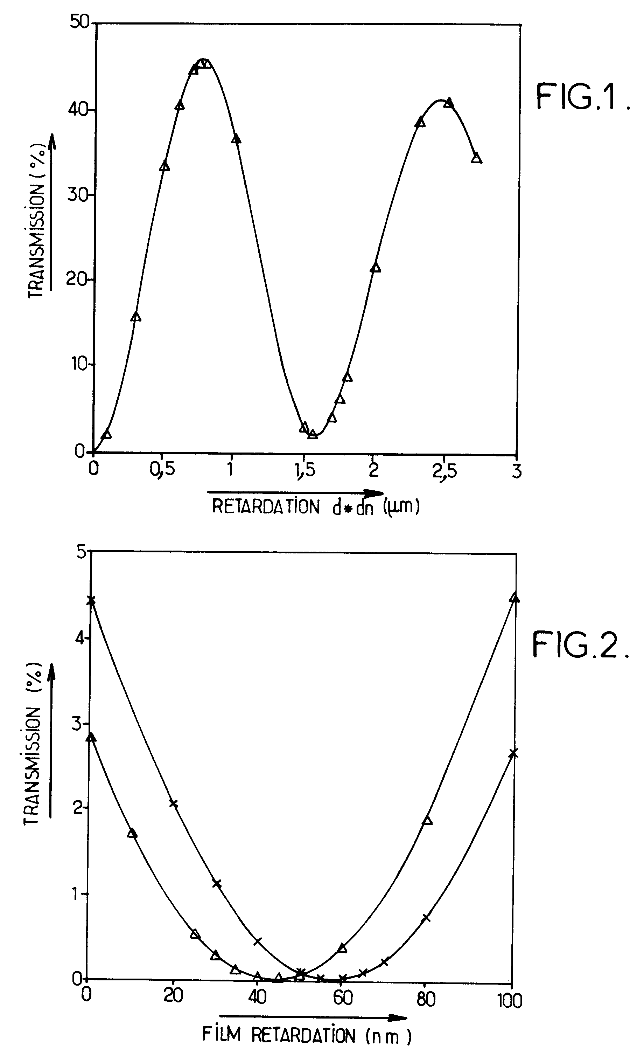

Fig. 1 is a representation of the transmission (or luminance for a pi-cell configuration between crossed polarizers as a function of the liquid-crystal retardation d*dn (d = cell thickness, and dn = liquid-crystal-bire-fringence = nₑ - nₒ), with normal-incidence light and director profile for 1.13 volts;
Fig. 2 is a representation of the transmission value as a function of the retardation value of the retardation film, the crosses, and triangles respectively corresponding to values at 9.08 volts and 7.64 volts, with normal-incidence light, a retardation film being placed so that its optical axis is parallel to the cell surfaces but perpendicular to the direction of the projection of the director on the cell surfaces;

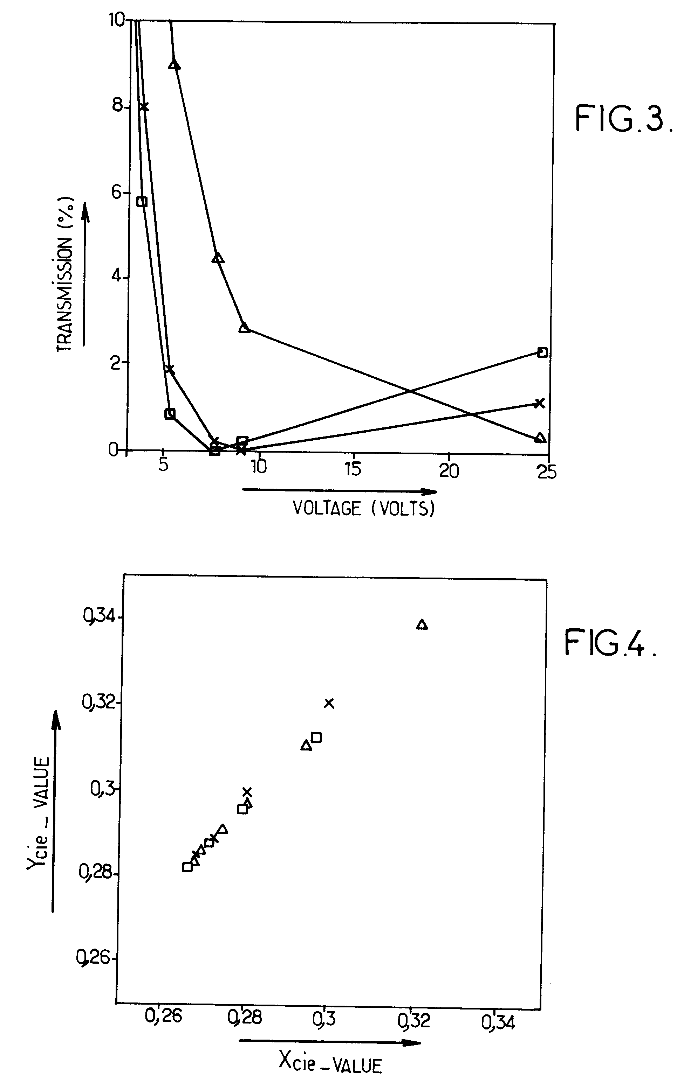

Fig. 3 is a representation of the transmission value as a function of the voltage for the pi-cell configuration between crossed polarizers, the triangles being for a pi-cell without retardation film, the crosses with a retardation film of 45 nm and the squares with a retardation film of 57 nm, under normal-incidence light;

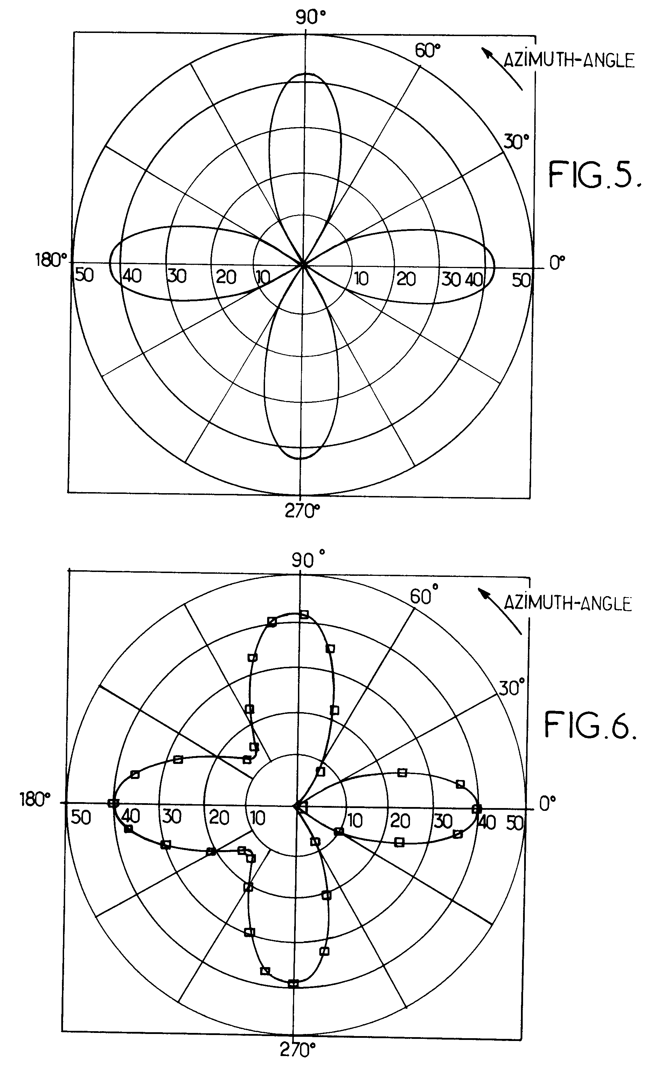

Fig. 4 indicates some values of colour points (X_{cie}, Y_{cie}) as a function of the voltage, the triangles being for pi-cell without film (voltage between 1.13 volts and 24.57 volts), the crosses for a pi-cell with a retardation film of 45 nm (voltage between 1.13 volts and 9.08 volts) and the squares for a pi-cell with a retardation film of 57 nm (voltage between 1.13 volts and 7.64 volts) under normal-incidence light;
Fig. 5 is a graph giving the transmission as a function of the azimuth angle for an "off-normal" angle of 60° for a pi-cell without a film at 24.57 volts (radial transmission scale is from 0 to 50 % and azimuth angle from 0 to 360°);
Fig. 6 is a graph giving the transmission as a function of the azimuth angle for an "off-normal" angle of 60° for a pi-cell with a single film having a retardation of 57 nm at 7.64 volts, and the same scales as in Fig. 5; and

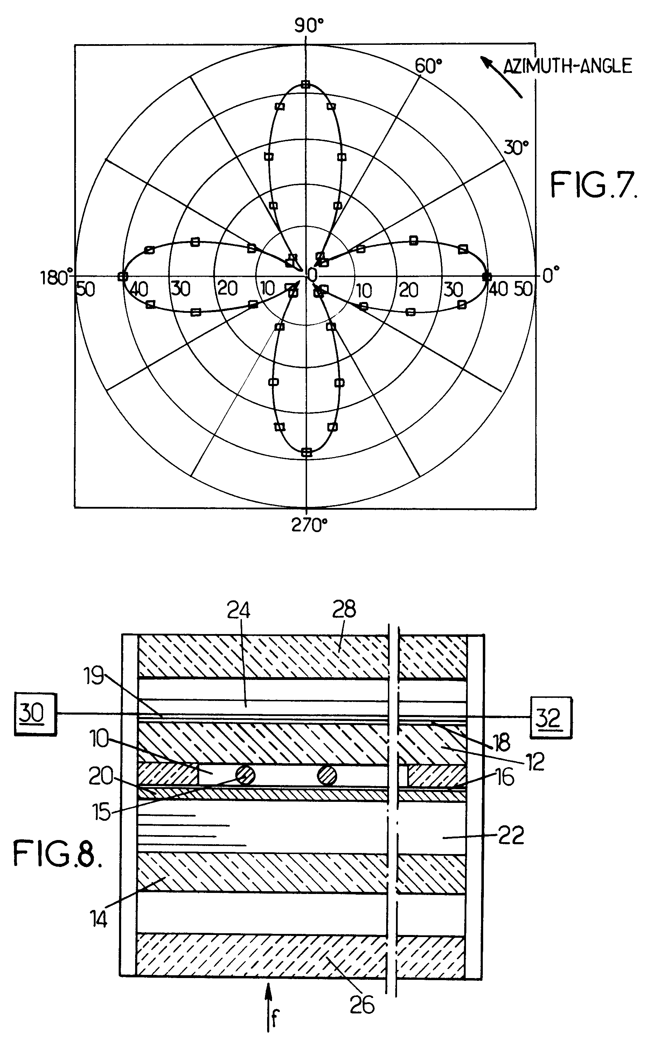

Fig. 7, similar to Figs. 5 and 6, is a graph giving the transmission as a function of the azimuth angle for an "off-normal" angle of 60° for a pi-cell with two films each having a retardation of 28.5 nm and each placed on one side of the pi-cell, the voltage being 7.64 volts, the scales being the same as in Figs. 5 and 6.

F. 8 is a schematic representation of a display device according to a particular embodiment of the invention.

### DETAILED DESCRIPTION

The invention will be explained below with the aid of results of computations, obtained on a pi-cell configuration which was placed between crossed polarizers which form an angle of 45° with the projection of the liquid-crystal director on the cell surfaces. In the results below, the use of an (additional) retardation film having negative retardation, (in order to increase the angle of view) is not included.

Whether or not such a film is used does not, in fact, affect the principle of the invention.

Computations of the liquid-crystal director profiles as a function of the voltage over the pi-cell configuration were carried out with the computation package DIMOS.

DIMOS is a widely used simulation package which is commercially available from Autronic, Karlsruhe, Germany. In the computations, the following typical values were used for cell parameters and liquid-crystal material properties.
- Cell thickness :: 10 microns
- Pre-tilt:: 10 degrees.
- Liquid-crystal parameters:: ε_{∥} = 15.0, ε_{⊥} = 5.0
K₁ = 12.0, K₂ = 7.3, K₃ = 18.0

The dielectric constants ε and the elastic constants K_{1,2,3} are in the conventional units .

The optical computations were carried out according to the standard Berreman 4*4 matrix formalism.

Director profiles of the pi-cell were obtained at: 1.13 volts, 2.07 volts, 2.90 volts, 3.69 volts, 5.22 volts, 7.64 volts, 9.08 volts and 24.57 volts.

The liquid-crystal director profile at 1.13 volts was selected as the profile which corresponds to the Bright state. Table 1 gives, for various liquid-crystal retardation values, the luminance L (in this case transmission using standard light source D65) and the CIE 1931 colour coordinates X_{cie} and Y_{cie} at 1.13 volts. Ideal polarizers were used. Figure I shows this relationship between luminance and liquid-crystal retardation in the form of a graph. It is evident that high brightness with good colour neutrality (i.e. colour coordinates close to the "white point" of D65, x=0.31 and y=0.33) is obtained with liquid-crystal retardation equal to 0.75. This means, for a cell thickness of 10 microns, that the birefringence of the liquid crystal is equal to 0.075. For the sake of simplicity, dispersion of the birefringence is not taken into consideration in the following analyses.

In all further computations, the values used for the liquid crystal are: nₑ = 1.5750 and nₒ = 1.5000.

In Table I the luminance is expressed in %.

The maximum luminance is, by definition, equal to 50 % (which corresponds to the transmission through two ideal parallel polarizers).

**TABLE I:**

| Liquid-crystal retardation | Luminance (%) | X_{cie} | Y_{cie} |
|---|---|---|---|
| 0.10 | 2.00 | 0.267 | 0.283 |
| 0.30 | 15.67 | 0.272 | 0.290 |
| 0.50 | 33.52 | 0.287 | 0.303 |
| 0.60 | 40.48 | 0.298 | 0.315 |
| 0.70 | 44.66 | 0.312 | 0.331 |
| 0.725 | 45.19 | 0.316 | 0.335 |
| 0.75 | 45.50 | 0.321 | 0.340 |
| 0.80 | 45.44 | 0.330 | 0.350 |
| 1.00 | 36.86 | 0.383 | 0.402 |
| 1.50 | 3.24 | 0.317 | 0.144 |
| 1.55 | 2.49 | 0.245 | 0.097 |
| 1.60 | 2.47 | 0.196 | 0.080 |
| 1.70 | 4.51 | 0.156 | 0.101 |
| 1.75 | 6.48 | 0.154 | 0.124 |
| 2.00 | 21.87 | 0.199 | 0.255 |
| 2.30 | 38.75 | 0.306 | 0.407 |
| 2.50 | 41.18 | 0.395 | 0.477 |
| 2.70 | 34.62 | 0.467 | 0.473 |

(Tabulated luminances and colour coordinates apply to normal-incidence light).

Table II shows, for various voltages, the resulting luminance and colour coordinates (likewise for normal-incidence light) for d*dn equal to 0.75.

This Table II illustrates that the transmission becomes small only at very high voltages and consequently that high contrasts (for example > 100) can be achieved only with very high voltages.

**TABLE II:**

| Voltage (volts) | Luminance (%) | X_{cie} | Y_{cie} |
|---|---|---|---|
| 1.13 | 45.50 | 0.321 | 0.340 |
| 2.07 | 38.54 | 0.294 | 0.311 |
| 2.90 | 27.12 | 0.280 | 0.297 |
| 3.69 | 18.38 | 0.274 | 0.291 |
| 5.22 | 9.02 | 0.269 | 0.286 |
| 7.64 | 4.47 | 0.268 | 0.285 |
| 9.08 | 2.85 | 0.267 | 0.283 |
| 24.57 | 0.40 | 0.267 | 0.282 |

Table III shows the effect of a retardation film on the transmission at 9.08 volts. The optical axis of the film is perpendicular to the direction of the projection of the liquid-crystal director on the cell surfaces.

Here, too, the results are obtained for normal-incidence light. The dispersion of the retardation of the film was not taken into account, for the sake of simplicity.

**TABLE III:**

| Retardation film (nm) | Luminance (%) | X_{cie} | Y_{cie} |
|---|---|---|---|
| 0 | 2.85 | 0.267 | 0.283 |
| 10 | 1.72 | 0.266 | 0.282 |
| 25 | 0.55 | 0.266 | 0.282 |
| 30 | 0.30 | 0.266 | 0.281 |
| 35 | 0.13 | 0.266 | 0.281 |
| 40 | 0.03 | 0.266 | 0.281 |
| 45 | 0.01 | -- | -- |
| 50 | 0.06 | 0.266 | 0.282 |
| 60 | 0.38 | 0.267 | 0.283 |
| 80 | 1.89 | 0.267 | 0.283 |
| 100 | 4.49 | 0.268 | 0.284 |
| 200 | 27.33 | 0.280 | 0.300 |

The data of Table III illustrate that the use of a retardation film having a retardation value equal to 45 nm gives rise to a very low transmission value at a voltage equal to 9.08 volts. The Dark state can therefore be attained, by means of using such a film, with a voltage below 10 volts.

Table IV shows the effect of the retardation of the film on the transmission at 7.64 volts (normal-incidence light)

**TABLE IV:**

| Retardation film (nm) | Luminance (%) | X_{cie} | Y_{cie} |
|---|---|---|---|
| 0 | 4.47 | 0.267 | 0.283 |
| 20 | 2.07 | 0.267 | 0.283 |
| 40 | 0.46 | 0.268 | 0.283 |
| 50 | 0.09 | 0.269 | 0.283 |
| 55 | 0.01 | -- | -- |
| 60 | 0.01 | -- | -- |
| 65 | 0.09 | 0.266 | 0.282 |
| 70 | 0.23 | 0.265 | 0.282 |
| 80 | 0.75 | 0.266 | 0.282 |
| 100 | 2.63 | 0.267 | 0.283 |

The above Table IV illustrates that the use of a film having a retardation value equal to 57 nm results in a transmission which is virtually equal to zero at a voltage of 7.64 volts.

Figure 2 shows, in the form of a graph, the effect of the film's retardation on the transmission at 7.64 volts and at 9.08 volts. Table V shows the luminance as a function of the voltage for the pi-cell without retardation film (second column), for the pi-cell with a retardation film having a value of 45 nm (third column), for the pi-cell with retardation film having the value of 57 nm (last column); luminance values apply to normal-incidence light.

This is again illustrated in Figure 3.

Figure 4 shows the colour points (i.e. X_{cie} and Y_{cie} coordinates) as a function of the voltage for the three configurations of Table V and Figure 3.

**TABLE V:**

| | | | Luminance (%) |
|---|---|---|---|
| Voltage (V) | Pi-cell | Pi-cell + 45 nm film | Pi-cell + 57 nm film |
| 1.13 | 45.50 | 42.88 | 39.03 |
| 2.07 | 38.54 | 29.35 | 25.56 |
| 2.90 | 27.12 | 15.87 | 12.87 |
| 3.69 | 18.38 | 8.04 | 5.80 |
| 5.22 | 9.02 | 1.87 | 0.83 |
| 7.64 | 4.47 | 0.24 | 0.00 |
| 9.08 | 2.85 | 0.00 | 0.25 |
| 24.57 | 0.40 | 1.21 | 2.42 |

In the previous observations, use was made of a single retardation film having a certain retardation value. Symmetry considerations render it extraordinarily attractive to replace this one film by two films which each have a retardation value which is equal to half the retardation value of the one film and which are each placed on one side of the pi-cell, with their optical axis perpendicular to the projection direction of the liquid-crystal director on the cell surfaces.

Fig. 5 to 7 illustrate that this results in a symmetrical angle-of-view dependence of the transmission. They show, in a polar diagram, the transmission as a function of the azimuth angle for an "off-normal" angle equal to 60°. The (radial) transmission scale runs from 0 to 50 %, and the azimuth angle varies from 0 to 360°.

Figure 5 shows the angle-of-view-dependent transmission of the pi-cell without a film at 24.57 volts.

Figure 6 gives this characteristic for the pi-cell with a single film having a retardation of 57 nm at 7.64 volts.

Figure 7 gives this characteristic for the pi-cell with two films which each have a retardation of 28.5 nm and which are each placed on one side of the pi-cell; the voltage, as in Figure VI, is equal to 7.64 volts.

As has already been indicated in the opening portion of the present patent application, the use of a retardation film having a negative retardation value and with the optical axis perpendicular to the cell surfaces results in a considerable improvement of the angle of view if a suitable choice is made of this retardation value.

These negative retardation films may of course be used in combination with the compensation films described in the present patent application.

Combinations of such films having negative retardation and films having positive retardation may then possibly be replaced by so-called biaxial retardation films for which the optical parameters (i.e. refractive indices and film thickness) can be derived, according to basic optical principles, from the optical parameters of the separate films.

Fig. 8 is a schematic representation of a display device according to a particular embodiment. The device has a thin layer 10 of liquid crystals, typically a layer some microns thick, of twisted nematic crystals. The layer 10 is located between two transparent plates 12 and 14, typically of glass. When there is no electrical field applied to the layer, the crystals are oriented by a coating 16. The arrangement is processed for providing "reversed" pre-tilt orientation.

Transparent plates 12 and 14 carry electrodes for constituting elementary capacitors each corresponding to one pixel. For instance, the outer surface of plate 12 may carry control electrodes constituting an array 18. Each electrode is connected to a thin transistor belonging to an electronic control matrix 19. The transistors are distributed in rows and columns driven by a row-driver circuit 30 and a column-driver circuit 32 which may have a conventional construction. The other transparent plate 14 carries a counter-electrode 20 which is typically a thin layer of ITO.

That unit is located between a polarizer 26 and an analyzer 28.

According to the embodiment of the invention which is illustrated in Fig. 8, a supplemental bi-refringent filter 24 is located between plate 12 and the analyzer 28 and generates an electrical polarization of the light directed along arrow f.

## Claims

1. Display device containing a liquid-crystal material between two support plates which are held at a defined spacing and have facing surfaces, there being disposed, on both surfaces, a pattern of electrodes which cross one another and display elements thus being formed at the location of the crossings, the device containing a control circuit for supplying voltage signals to both electrode patterns, by means of which the display elements can be switched from a first state to an optically different second state;
the liquid cristal material being present in an optically self-compensating liquid crystal director configuration and being placed between two polarizers having mutually perpendicular (or virtually perpendicular) transmission directions (or polarization directions), said polarization directions forming an angle of 45° (or virtually equal to 45°) with respect to the projection of the liquid-crystal director on the support plates,
characterized in that:
the retardation of the liquid-crystal layer, defined as the product of layer thickness and liquid-crystal birefringence value is chosen in such a way that the display device can be switched between a bright high-transmission state at low voltage and a dark low-transmission state at high voltage.

2. Display device according to Claims 1, characterized in that the retardation of the liquid crystal is less than 1.5 microns, and preferably less than 1.0 micron.

3. Display device according to Claim 1, characterized in that at least one retardation film having a positive retardation value is placed between polarizers and liquid-crystal cell in such a way that the optical axis of the retardation film forms an angle of approximately 90° with the projection of the liquid-crystal director on the support plates and in that the optical axis is parallel to the support plates.

4. Display device according to Claim 3, characterized in that the retardation values of the retardation film or films is less than 200 nm and preferably less than 100 nm.

5. Display device according to any one of Claims 1-4, characterized in that, if a plurality of retardation films are used, on both sides of the liquid-crystal cell a number of retardation films are placed in such a way that the total retardation of the films on the one side of the cell is substantially equal to the total retardation of the films on the other side.

6. Display device according to Claim 1 or 2, characterized in that at least one retardation having a negative retardation value is placed between the polarizers and the liquid-crystal cell in such a way that the optical axis of the retardation film is perpendicular to the support plates and in such a way that the absolute value of the total retardation of the films does not exceed 1.0 micron.

7. Display device according to Claim 6, characterized in that, if a plurality of films are used, said films are placed on both sides of the liquid-crystal cell in such a way that the sum of the retardation values of said films on the one side of the cell is substantially equal to the sum of the retardation values of said films on the other side of the cell.

8. Display device according to any one of Claim 3-7, characterized in that the group of retardation films having negative and positive retardation values, which is placed on both sides of the cell, is replaced by at least one biaxial retardation film having optical parameters so selected that the optical properties of said biaxial films are equal to those of said group of films.

9. Display device according to any preceding claim, characterized in that said liquid crystal material is present in a pi-cell configuration with reversed pre-tilt.
